(19) Europäisches Patentamt
European Patent Office
Office européen des brevets

(11) **EP 2 058 208 A1**

(12) **EUROPÄISCHE PATENTANMELDUNG**

(43) Veröffentlichungstag:
**13.05.2009 Patentblatt 2009/20**

(51) Int Cl.:
***B62D 5/00*** *(2006.01)*

(21) Anmeldenummer: **08104824.1**

(22) Anmeldetag: **22.07.2008**

(84) Benannte Vertragsstaaten:
**AT BE BG CH CY CZ DE DK EE ES FI FR GB GR HU IE IS IT LI LT LU LV MC MT NL PL PT RO SE SI SK TR**
Benannte Erstreckungsstaaten:
**AL BA HR MK RS**

(30) Priorität: **06.11.2007 DE 102007000975**

(71) Anmelder: **ZF-Lenksysteme GmbH**
**73527 Schwäbisch Gmünd (DE)**

(72) Erfinder:
• **Büring, Hendrik**
**73525, Schwäbisch Gmünd (DE)**
• **Wanner, Thomas**
**73525, Schwäbisch Gmünd (DE)**
• **Grossheim, Reinhard**
**73457, Essingen (DE)**

(54) **Verfahren zum ansteuer einer überlagerungslenkung**

(57) Es werden ein Verfahren zum Betreiben einer Überlagerungslenkung, eine Überlagerungslenkung (10), ein Computerprogramm sowie ein Computerprogrammprodukt vorgestellt. Bei dem Verfahren kann eine Fahrgeschwindigkeit bei der Ermittlung einer Lenkübersetzung berücksichtigt werden, so dass die Lenkübersetzung in Abhängigkeit der Fahrgeschwindigkeit verändert wird. Dabei ist vorgesehen, dass eine Änderung der Fahrgeschwindigkeit bei der Ermittlung der Lenkübersetzung nur während einer Lenkbewegung berücksichtigt wird.

**Figur 2**

EP 2 058 208 A1

## Beschreibung

Die Erfindung betrifft, ein Verfahren zum Betreiben einer Überlagerungslenkung, eine solche Überlagerungslenkung, ein Steuergerät zum Einsatz in einer solchen Überlagerungslenkung sowie ein Computerprogramm und ein Computerprogrammprodukt mit Programmcodemittel, um ein derartiges Verfahren durchzuführen.

Bei einer Überlagerungs- bzw. Winkelüberlagerungslenkung erfolgt eine Überlagerung des vom Fahrer vorgegebenen Lenkradwinkels mit einem Überlagerungs- bzw. Zusatzwinkel zur situationsabhängigen Unterstützung des Fahrers. Dabei ergibt sich der sog. Ritzelwinkel, der den eigentlichen Lenkwinkel und somit das Maß der Auslenkung der angelenkten Räder bestimmt.

Die Funktion des geschwindigkeitsabhängigen variablen Übersetzungsverhältnisses für Überlagerungslenkungssysteme ermittelt dabei in Abhängigkeit der Fahrzeuglängsgeschwindigkeit eine geschwindigkeitsabhängige variable Lenkübersetzung zwischen Lenkradwinkel und Ritzelwinkel. Aus diesem Zusammenhang ergibt sich ein Überlagerungswinkel bzw. Zusatzwinkel, der vom Zusatzwinkelsteller des Überlagerungslenksystems einzustellen ist.

Bei bekannten Verfahren zum Betreiben einer Überlagerungslenkung wird ein von einer Lenkhandhabe vorgegebener Lenkradwinkel mit einem Lenkgetriebe in den Ritzelwinkel umgesetzt, der ein Maß des Radlenkwinkels für wenigstens ein lenkbares Rad des Kraftfahrzeugs bestimmt. Dabei wird ein Zusatzwinkel generiert und in dem Lenkgetriebe dem vorgegebenen Lenkradwinkel überlagert. Es folgt somit eine Überlagerung des vom Fahrer bestimmten Lenkradwinkels durch einen üblicherweise in Abhängigkeit der Fahrgeschwindigkeit generierten Zusatzwinkel.

Der über das Lenkrad vorgegebene Lenkwinkel $\delta_S$ wird von dem Zusatzwinkel $\delta_M$ überlagert, so dass sich ein Ritzelwinkel $\delta_G$ ergibt, der direkten Einfluss auf den an den Vorderrädern anliegenden Lenkwinkel $\delta_F$ hat.

Es gilt

$$i_v = \frac{\delta_S}{\delta_F}$$

wobei $i_v$ als Übersetzungsverhältnis bezeichnet, wird, das das Verhältnis zwischen Lenkradwinkel $\delta_S$ und Vorderradwinkel $\delta_F$ definiert.

Die Lenkübersetzung der Überlagerungslenkung, die das Verhältnis zwischen Lenkradwinkel $\delta_S$ und Ritzelwinkel $\delta_G$ bestimmt, beeinflusst somit direkt das Übersetzungsverhältnis $i_v$.

Bei einer sogenannten Aktivlenkung, die eine solche Überlagerung realisiert, ergibt sich bei einer beschleunigten oder gebremsten Kurvenfahrt durch die Variation der Lenkübersetzung eine Veränderung im Kurvenradius, die mit dem Lenkrad korrigiert werden muss, falls ein konstanter Kurvenradius gefahren werden soll.

Üblicherweise zeigt eine Aktivlenkung bei geringen Geschwindigkeiten ein direktes und bei höheren Geschwindigkeiten ein indirektes Lenkverhalten, dies führt zu einer Änderung des Kurvenradius bei einer Kurvenfahrt mit konstantem Lenkeinschlag und variierender Geschwindigkeit.

Es ist eine Vorgehensweise bekannt, bei der die stabile Kurvenfahrt über das Festhalten der Sollübersetzung erreicht werden soll. Hierbei wird nach einer Erkennung eines Zustands einer Kurvenfahrt des Kraftfahrzeugs mit wenigstens annähernd konstantem Kurvenradius wenigstens der Gradient des Übersetzungsverhältnisses zwischen dem Lenkradwinkel und dem Radlenkwinkel beschränkt. Damit wird aber das gewohnte Verhalten der Lenkung, nämlich die variable Übersetzung über den Lenkeinschlag, ebenfalls verhindert.

Das erfindungsgemäße Verfahren zum Betreiben einer Überlagerungslenkung, bei dem eine Fahrgeschwindigkeit bei der Ermittlung einer Lenkübersetzung berücksichtigt wird, so dass die Lenkübersetzung in Abhängigkeit der Fahrgeschwindigkeit verändert werden kann, sieht vor, dass eine Änderung der Fahrgeschwindigkeit bei der Ermittlung der Lenkübersetzung nur während einer Lenkbewegung berücksichtigt wird.

Somit wird der Einfluss der Geschwindigkeit auf die Lenkübersetzung abhängig vom Lenkaufwand realisiert, d. h. wenn eine Lenkbewegung stattfindet wird die tatsächlich gefahrene Geschwindigkeit bei der Ermittlung der Lenkübersetzung berücksichtigt. Bei einer konstanten Kurvenfahrt mit festem Lenkeinschlag wirkt sich eine Änderung der Fahrgeschwindigkeit nicht auf die Lenkübersetzung aus. Erst wenn eine Lenkbewegung erfolgt, wird die geänderte Geschwindigkeit typischerweise zeitlich verzögert wieder bei der Ermittlung der Lenkübersetzung berücksichtigt.

In Ausgestaltung ist es vorgesehen, dass erst ab einem vorbestimmten Lenkeinschlag dieses Verfahren zur Anwendung kommt. Dies bedeutet, dass bspw. in einer Geradeausfahrt eine Änderung der Fahrgeschwindigkeit durchaus bei der Ermittlung der Lenkübersetzung berücksichtigt wird.

Weiterhin kann vorgesehen sein, dass die Lenkübersetzung zusätzlich in Abhängigkeit eines Lenkradwinkels verändert wird.

Die erfindungsgemäße Überlagerungslenkung eines Kraftfahrzeugs weist eine Lenkhandhabe zur Vorgabe eines Lenkradwinkels, einen Zusatzwinkelsteller, der einen Zusatzwinkel erzeugt, wobei die Fahrgeschwindigkeit berücksichtigt wird, ein Lenkgetriebe, das den Lenkradwinkel durch eine Überlagerung des Lenkradwinkels mit dem Zusatzwinkel in einen Ritzelwinkel umsetzt, auf. Dabei ist vorgesehen, dass eine Änderung der Fahrgeschwindigkeit bei der Ermittlung der Lenkübersetzung und damit bei der Erzeugung des Zusatzwinkels nur während einer Lenkbewegung berücksichtigt wird.

In Ausgestaltung umfasst der Zusatzwinkelsteller einen Elektromotor, der mit einem Steuergerät angesteuert ist.

Das erfindungsgemäße Steuergerät dient insbesondere zur Durchführung eines vorstehend beschriebenen Verfahrens, das in einer vorstehend erörterten Überlagerungslenkung zum Einsatz kommt und dazu ausgelegt ist, einen Zusatzwinkel zu ermitteln, wobei die Fahrgeschwindigkeit berücksichtigt wird. Dabei ist erfindungsgemäß vorgesehen, dass eine Änderung der Fahrgeschwindigkeit nur während einer Lenkbewegung berücksichtigt wird.

Das erfindungsgemäße Computerprogramm umfasst Programmcodemittel, um ein Verfahren zum Betreiben einer Überlagerungslenkung der vorstehend beschriebenen Art durchzuführen, wenn das Computerprogramm auf einem Mikroprozessor eines Computers, insbesondere in einem Steuergerät der Überlagerungslenkung, ausgeführt wird.

Dieses Computerprogramm kann auf einem computerlesbaren Datenträger, wie bspw. einer Diskette, CD, DVD, Festplatte, einem USB Memory Stick oder ähnlichem, oder einem Internetserver als Computerprogrammprodukt gespeichert sein. Von dort kann das Computerprogramm in ein Speicherelement des Steuergeräts übertragen werden.

Weitere Vorteile und Ausgestaltungen der Erfindung ergeben sich aus der Beschreibung und der beiliegenden Zeichnung.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand eines Ausführungsbeispiels in der Zeichnung schematisch dargestellt und wird im folgenden unter Bezugnahme auf die Zeichnung ausführlich beschrieben.

Figur 1     zeigt das Verhalten einer herkömmlichen Aktivlenkung bei einer Kurvenfahrt.

Figur 2     zeigt eine Ausführungsform der erfindungsgemäßen Überlagerungslenkung.

Figur 3     zeigt ein beispielhaftes Übersetzungsverhältnis als Funktion der Fahrzeuggeschwindigkeit zur Verdeutlichung des erfindungsgemäßen Verfahrens.

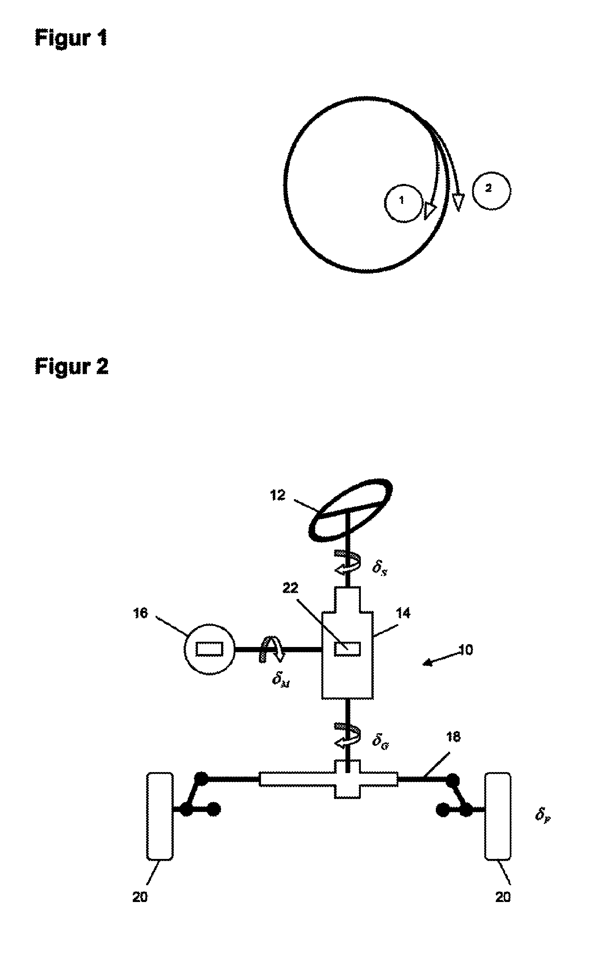

In Figur 1 ist das Verhalten einer herkömmlichen Aktivlenkung bei einer Kurvenfahrt verdeutlicht. In einem mit 1 gekennzeichneten Verlauf ist eine Abbremsung des Fahrzeugs dargestellt. Zu erkennen ist, dass beim Abbremsen des Fahrzeugs die Lenkübersetzung direkter wird. Somit wird bei gleichem. Lenkeinschlag an den Vorderrädern ein größerer Winkel gestellt. Der gefahrene Kurvenradius verkleinert sich somit.

Bei dem mit 2 gekennzeichneten Verlauf ist eine Beschleunigung des Fahrzeugs wiedergegeben, bei der die Lenkübersetzung indirekter wird, Somit wird bei gleichem Lenkeinschlag an den Vorderrädern ein kleinerer Winkel gestellt. Der gefahrene Kurvenradius vergrößert sich.

Erfindungsgemäß soll nunmehr erreicht werden, dass eine Änderung des Kurvenradius, wie in Figur 1 dargestellt ist, nicht erfolgt.

In Figur 2 ist eine Ausführungsform der erfindungsgemäßen Überlagerungslenkung dargestellt, die insgesamt mit der Bezugsziffer 10 bezeichnet ist. In der Darstellung sind eine Lenkhandhabe 12, in diesem Fall ein Lenkrad, ein Lenkgetriebe 14, ein Zusatzwinkelsteller 16 und zwei über eine Vorderachse 18 verbundene Vorderräder 20, die zum Steuern des Fahrzeugs angelenkt werden, dargestellt.

Weiterhin ist ein Steuergerät 22 vorgesehen, dass zur Ansteuerung eines Elektromotors 24 des Zusatzwinkelstellers 16 vorgesehen ist.

Der über die Lenkhandhabe 12 vorgegebene Lenkwinkel $\delta_s$ wird in dem Lenkgetriebe 14 von einem Zusatzwinkel bzw. Motorlenkwinkel $\delta_M$ des Elektromotors 24 des Zusatzwinkelstellers 16 überlagert, so dass sich ein Ritzelwinkel $\delta_G$ ergibt, der direkten Einfluss auf die an den Vorderrädern anliegenden Lenkwinkel $\delta_F$ hat.

Es gilt

$$i_v = \frac{\delta_s}{\delta_F}$$

und

$$\delta_M \quad \times \quad i_M + \delta_S \times i_D = \delta_G$$

wobei $i_M$ und $i_D$ vorzugebende Faktoren sind.

Erfindungsgemäß ist nunmehr vorgesehen, dass eine Änderung der Fahrzeuggeschwindigkeit bei der Ermittlung der Lenkübertragung und somit des Übertragungsverhältnisses $i_v$ nur berücksichtigt wird, wenn eine Lenkbewegung vorliegt. Daher wird bei einer Kurvenfahrt, wie diese in Figur 1 dargestellt ist, ein Ändern der Fahrgeschwindigkeit nicht berücksichtigt und die Lenkübersetzung und damit $i_v$ bleiben konstant.

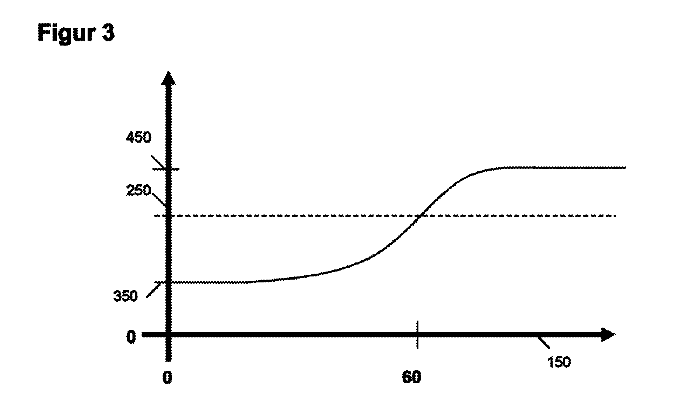

In Figur 3 ist in einem Graphen ein beispielhaftes Übersetzungsverhältnis $i_v$ als Funktion der Fahrzeuggeschwindigkeit zur Verdeutlichung des erfindungsgemäßen Verfahrens aufgetragen.

In dem gezeigten Graphen ist an der Abszisse 150 die Fahrzeuggeschwindigkeit und an der Ordinate 250 das Obersetzungsverhältnis $i_v$ aufgetragen. Der Graph verdeutlicht somit das Übersetzungsverhältnis $i_v$ als Funktion der Fahrzeuggeschwindigkeit, wobei das Übersetzungsverhältnis $i_v$ als das Verhältnis zwischen Lenkradwinkel und Vorderradwinkel definiert ist, nämlich:

$$i_v = \text{Sollübersetzung} = \text{Lenkradwinkel/Vorderradwinkel}$$

Das Übersetzungsverhältnis $i_v$ verläuft zwischen $i_{v\,min}$ 350 bei geringen Geschwindigkeiten, d.h. in direktem Betrieb bzw. ins Direkte, und $i_{vmax}$ 450 bei hohen Geschwindigkeiten, d.h. im indirekten Betrieb. Zu erkennen ist, dass bei einer Geschwindigkeit von 60 km/h ein rein mechanisches Lenken erfolgt und der Zusatzwinkelsteller nicht eingreift. Bei niedrigen Geschwindigkeiten wird unterstützend eingegriffen und bei hohen Geschwindigkeiten wird gegengelenkt.

Die Darstellung verdeutlicht, dass $i_v$ geschwindigkeitsabhängig eingestellt wird. Erfindungsgemäß ist jedoch vorgesehen, dass eine Änderung der Geschwindigkeit sich nur auswirkt, wenn eine Lenkbewegung vorliegt. Liegt keine Lenkbewegung vor, bspw. in einer Kurvenfahrt, dann bleibt die Lenkübersetzung und somit $i_v$ konstant . Der Einfluss der Geschwindigkeit auf $i_v$ wird folglich "eingefroren".

**Patentansprüche**

1. Verfahren zum Betreiben einer Überlagerungslenkung (10), bei dem eine Fahrgeschwindigkeit bei der Ermittlung einer Lenkübersetzung berücksichtigt wird, so dass die Lenkübersetzung in Abhängigkeit der Fahrgeschwindigkeit verändert werden kann,
**dadurch gekennzeichnet, dass** eine Änderung der Fahrgeschwindigkeit nur während einer Lenkbewegung bei der Ermittlung der Lenkübersetzung berücksichtigt wird.

2. Verfahren nach Anspruch 1, das erst ab einem vorbestimmten Lenkeinschlag zur Anwendung kommt.

3. Verfahren nach einem der Ansprüche 1 bis 3, bei dem die Lenkübersetzung zusätzlich in Abhängigkeit eines Lenkradwinkels ($\delta_S$) verändert wird.

4. Überlagerungslenkung eines Kraftfahrzeugs mit
einer Lenkhandhabe (12) zur Vorgabe eines Lenkradwinkels ($\delta_S$),
einem Zusatzwinkelsteller (16), der einen Zusatzwinkel ($\delta_M$) erzeugt, wobei die Fahrgeschwindigkeit berücksichtigt wird,
einem Lenkgetriebe (14), das den Lenkradwinkel *($\delta_S$)* durch eine Überlagerung des Lenkradwinkels *($\delta_S$)* mit dem Zusatzwinkel *($\delta_M$)* in einen Ritzelwinkel ($\delta_G$) umsetzt,
**dadurch gekennzeichnet, dass** eine Änderung der Fahrgeschwindigkeit nur während einer Lenkbewegung bei der Ermittlung der Lenkübersetzung berücksichtigt wird.

5. Überlagerungslenkung nach Anspruch 4, bei der der Zusatzwinkelsteller (16) einen Elektromotor (24) umfa.sst, der mit einem Steuergerät (22) angesteuert ist.

6. Steuergerät, insbesondere zur Durchführung eines Verfahrens nach einem der Ansprüche 1 bis 3, das in einer Überlagerungslenkung (10) nach Anspruch 4 oder 5 zum Einsatz kommt und dazu ausgelegt ist, einen Zusatzwinkel

($\delta_M$) zu ermitteln, wobei die Fahrgeschwindigkeit berücksichtigt wird,
**dadurch gekennzeichnet, dass** eine Änderung der Fahrgeschwindigkeit nur während einer Lenkbewegung bei der Ermittlung der Lenkübersetzung berücksichtigt wird.

7. Computerprogramm mit Programmcodemitteln, um ein Verfahren nach einem der Ansprüche 1 bis 3 durchzuführen, wenn das Computerprogramm auf einem Mikroprozessor eines Computers, insbesondere in einem Steuergerät (22) nach Anspruch 6 in einer Überlagerungslenkung (10) nach Anspruch 4 oder 5, ausgeführt wird.

8. Computerprogrammprodukt mit Programmcodemitteln, die auf einem computerlesbaren Datenträger gespeichert sind, um ein Verfahren nach einem der Ansprüche 1 bis 3 durchzuführen, wenn das Computerprogramm auf einem Mikroprozessor eines Computers, insbesondere in einem Steuergerät (22) gemäß Anspruch 6 in einer Überlagerungslenkung (10) nach Anspruch 4 oder 5, ausgeführt wird.

# Figur 1

# Figur 2

**Figur 3**

Europäisches
Patentamt

European
Patent Office

Office européen
des brevets

# EUROPÄISCHER RECHERCHENBERICHT

Nummer der Anmeldung

EP 08 10 4824

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | WO 2005/063548 A (CONTINENTAL TEVES AG & CO OHG [DE]; BOEHM JUERGEN [DE]; LINKENBACH STE) 14. Juli 2005 (2005-07-14) * Seite 3, Absatz 5 - Seite 5, Absatz 1 * * Seite 11, Absatz 2 - Absatz 4 * * Ansprüche 1,3,7 * * Abbildung 1 *  ----- | 1-8 | INV. B62D5/00 |
| A | DE 10 2006 017406 A1 (ZF LENKSYSTEME GMBH [DE]) 18. Oktober 2007 (2007-10-18) * Absatz [0033] - Absatz [0036] * * Ansprüche 1-7 * * Abbildung 1 *  ----- | 1-8 | |

RECHERCHIERTE SACHGEBIETE (IPC)

B62D

Der vorliegende Recherchenbericht wurde für alle Patentansprüche erstellt

| Recherchenort | Abschlußdatum der Recherche | Prüfer |
|---|---|---|
| Berlin | 3. Dezember 2008 | Wilson, Mark |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
........................................................................
& : Mitglied der gleichen Patentfamilie, übereinstimmendes Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 08 10 4824

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

03-12-2008

| Im Recherchenbericht angeführtes Patentdokument | Datum der Veröffentlichung | Mitglied(er) der Patentfamilie | Datum der Veröffentlichung |
|---|---|---|---|
| WO 2005063548 A | 14-07-2005 | KEINE | |
| DE 102006017406 A1 | 18-10-2007 | KEINE | |

Für nähere Einzelheiten zu diesem Anhang : siehe Amtsblatt des Europäischen Patentamts, Nr.12/82